# EUROPÄISCHE PATENTSCHRIFT

(11) **EP 2 663 484 B1**
(45) Veröffentlichungstag und Bekanntmachung des Hinweises auf die Patenterteilung: **12.11.2014**
(21) Anmeldenummer: 12701057.7
(22) Anmeldetag: 10.01.2012
(51) Int. Cl.: B62B 1/18, B62D 53/00, B62B 5/00, B62B 1/00, B62B 1/20

(54) **MULTIFUNKTIONALES TRANSPORTSYSTEM MIT MEHREREN FAHRBAREN TRANSPORTEINHEITEN**
MULTI FUNCTIONAL TRANSPORT SYSTEM WITH MULTIPLE MOBILE UNITS
SYSTEME DE TRANSPORT MULTIFONCTION AVEC DES UNITES MULTIPLES

(30) Priorität: 10.01.2011 DE 102011008226
(43) Veröffentlichungstag der Anmeldung: 20.11.2013
(73) Patentinhaber: Fraunhofer-Gesellschaft zur Förderung der angewandten Forschung e.V., 80686 München (DE)
(72) Erfinder: SCHÖNEWOLF, Werner, 14612 Falkensee (DE); BRÜNING, Matthias, 13189 Berlin (DE); UHLMANN, Eckart, 25368 Kiebitzreihe (DE)
(74) Vertreter: Gagel, Roland
(86) Internationale Anmeldenummer: PCT/EP2012/000087
(87) Internationale Veröffentlichungsnummer: WO 2012/095302

(56) Entgegenhaltungen:
- EP-A1- 1 630 061
- DE-A1- 10 309 621
- DE-A1- 19 723 973
- DE-U1- 20 317 246
- FR-A1- 2 883 242

## Beschreibung

### Technisches Anwendungsgebiet

Die vorliegende Erfindung betrifft ein aus einem Führungsfahrzeug und mehreren Transporteinheiten bestehendes fahrbares Transportsystem, dessen Transporteinheiten jeweils in einem vorderen und einem hinteren Bereich eine Kupplungsvorrichtung aufweisen, über die die Transporteinheiten aneinander und/oder an das Führungsfahrzeug koppelbar sind.

Für die Sendungszustellung im innerstädtischen Bereich werden bisher üblicherweise Nutzfahrzeuge im Segment der Kleintransporter bis 3,5 t eingesetzt. Insbesondere im Fall gewerblicher Kunden, bspw. in Fußgängerzonen oder Einkaufszentren, werden dabei die Paketsendungen manuell durch den Zusteller aus dem Transportfahrzeug auf ein handgeführtes Transportmittel umgeladen und zum Kunden verbracht. Die Sendungen müssen hierzu zunächst im Depot per Hand einzeln in das Zustellfahrzeug und dann im Zustellgebiet erneut manuell auf das handgeführte Transportmittel, beispielsweise einen Sackkarren, umgeladen werden. Dieser mehrfache Warenumschlag erhöht die Kosten der Zustellung. Weiterhin darf das Gewicht der Sendungen dabei die physische Zumutbarkeitsgrenze (bspw. derzeit 31,5 kg bei DHL) nicht überschreiten. Durch den Umladevorgang bei der Zustellung werden Verkehrsflächen des ruhenden Verkehrs (Parkraum) und des fließenden Verkehrs (zweite Reihe) belegt, wodurch der Verkehrsfluss behindert und verkehrsbedingte Emissionen erhöht werden.

### Stand der Technik

Zur Verminderung dieser Problematik wurde im Rahmen des EU-geförderten Forschungsprojektes FIDEUS (6. Forschungsrahmenprogramm, Priorität 6.2 - Nachhaltige Transportsysteme) ein Lösungsansatz entwickelt, bei dem der Weg zwischen Zustellfahrzeug und Kunde durch einen Fahrzeugverbund aus einem kompakten Führungsfahrzeug und mehreren kompakten Anhängern überbrückt werden soll. Der Vorteil dieser Lösung besteht in der uneingeschränkten Handhabbarkeit des Fahrzeugverbundes sowohl im Straßenraum als auch in Fußgängerzonen ohne zeitliche Einschränkungen, also auch geeignet für den Einsatz in zeitlichen Tagesrandlagen.

Die Realisierung einer spurtreuen Fahrweise der fahrbaren Transporteinheiten bzw. Anhänger, bei der die Räder aller Anhänger ohne seitliche Abweichungen der Spur des Führungsfahrzeugs folgen, verbessert die Navigierbarkeit des Fahrzeugverbundes. Eine derartige Fahrweise wurde für ein konventionelles Gelenkfahrzeug durch eine geregelte Lenkung der Anhängerräder realisiert, wie sie bspw. der DE 10 2006 037 588 A1 zu entnehmen ist.

Die DE 600 25 756 T2 befasst sich mit dem Aufbau der Kupplungsvorrichtung zwischen zweiachsigen Anhängern.

Die DE 20 2008 006 289 U1 beschreibt einen Anhänger für das bekannte, auf dem Markt befindliche SEGWAY-Fahrzeug, so dass damit auch Lasten befördert werden können. Es wird dabei immer davon ausgegangen, dass eine Person auf dem SEGWAY steht und dieses in bekannter Weise manövriert. Das SEGWAY stellt somit in diesem Fall ein Zugfahrzeug dar, an dem ein Anhänger als Transporteinheit angekoppelt ist.

Die DE 631 709 A beschreibt einen einachsigen Anhänger zum Befördern von Kästen und anderen Gütern, der einerseits durch den Bediener handgeführt werden kann und sich andererseits auch an ein Fahrzeug ankoppeln lässt. Durch eine entsprechende Ankopplungsvorrichtung können auch gleichzeitig mehrere Anhänger miteinander verbunden werden.

FR 2 883 242 A1 beschreibt ein Transportsystem mit mehreren fahrbaren Transporteinheiten, die jeweils in einem vorderen und einem hinteren Bereich eine Kupplungsvorrichtung aufweisen, über die sie aneinander und/oder an ein Führungsfahrzeug koppelbar sind, wobei die Transporteinheiten einachsige Fahrzeuge sind, deren Achse mit jeweils einem Rad pro Seite, mit mehreren Rädern pro Seite oder mit umlaufenden Riemen bzw. Ketten bestückt ist, jede Transporteinheit wenigstens einen Handgriff aufweist, über den die Transporteinheit von einer Bedienperson manuell geführt werden kann.

Die Aufgabe der vorliegenden Erfindung besteht darin, ein Transportsystem mit fahrbaren Transporteinheiten bereitzustellen, das gegenüber den bestehenden Lösungen eine Verbesserung in der Handhabbarkeit, eine Reduktion der Fahrzeugkomplexität sowie einen universellen Einsatz ermöglicht, insbesondere für Transport und Zustellung von Warensendungen im urbanen Umfeld.

### Darstellung der Erfindung

Die Aufgabe wird mit dem Transportsystem gemäß Patentanspruch 1 gelöst. Vorteilhafte Ausgestaltungen des Transportsystems sind Gegenstand der abhängigen Patentansprüche oder lassen sich der nachfolgenden Beschreibung sowie dem Ausführungsbeispiel entnehmen.

Das vorgeschlagene Transportsystem umfasst mehrere fahrbare Transporteinheiten, die einachsig ausgeführt sind und jeweils in einem vorderen und einem hinteren Bereich eine Kupplungsvorrichtung aufweisen, über die sie aneinander und/oder an ein Führungsfahrzeug koppelbar sind. Das Transportsystem zeichnet sich dadurch aus, dass jede Transporteinheit wenigstens einen Handgriff aufweist, über den die Transporteinheit von einer Bedienperson manuell geführt werden kann.

Damit lassen sich die einzelnen Transporteinheiten für die Bedienperson sehr flexibel handhaben. Einerseits können die Transporteinheiten im Fahrzeugverbund mit einem Führungsfahrzeug wie bisher in gewohnter weise möglichst nahe an den Zustellort verbracht werden. Andererseits lässt sich jede einzelne Transporteinheit durch die Bedienperson leicht aus dem Fahrzeugverbund auskoppeln und wie ein handgeführtes Transportfahrzeug manuell bis zum Zustellort verbringen. Ein Umladen des Transportgutes ist hierbei nicht mehr erforderlich.

Die Kupplungsvorrichtungen an den Transporteinheiten können bspw. mechanische, elektromagnetische oder virtuelle Kupplungen (entsprechend einer "elektronischen Deichsel", bei der das Folgefahrzeug ohne mechanische Kupplung spur- und abstandstreu dem vorausfahrenden Fahrzeug folgt) sein. Für die Bildung des Fahrzeugverbundes werden die einzelnen Transporteinheiten über diese Kupplungen hintereinander gekoppelt und mit einem Führungsfahrzeug verbunden. Zur Entnahme der einzelnen Transporteinheiten kann die Bedienperson die Kupplungen lösen und die einzelne Transporteinheit über den Handgriff manuell führen. Unter einem Handgriff wird hierbei ein speziell für eine Handführung der Transporteinheit ausgestaltete Komponente verstanden, über die sich die Transporteinheit ziehen und/oder schieben sowie lenken lässt. Vorzugsweise sind hierbei zwei Handgriffe bzw. eine Komponente mit zwei Griffbereichen an der Transporteinheit vorgesehen.

Die einzelnen Transporteinheiten, auch als Anhänger bezeichnet, sind als einachsige Fahrzeuge ausgeführt, wobei die Achse bei der eingekoppelten Transporteinheit im Fahrzeugverbund beispielsweise im hinteren Bereich der Transporteinheit gelagert ist. Die Transporteinheiten sind dabei vorzugsweise so ausgeführt, dass sie im ausgekoppelten Zustand manuell wie eine Sackkarre geführt werden können. Die Achse ist hierbei vorzugsweise pro Achsende mit jeweils einem Rad bestückt. In einer weiteren Ausgestaltung kann die Achse auch mit jeweils mehreren Rädern pro Achsende bestückt sein, bspw. um das Befahren von Unebenheiten oder Treppen zu erleichtern. Weiterhin kann die Achse pro Achsende bspw. auch jeweils einen umlaufenden Riemen/Kettenantrieb aufweisen.

In einer vorteilhaften Weiterbildung umfasst jede Transporteinheit einen eigenen motorisierten Antrieb. Bauartbedingt kann ein derartiger Antrieb bspw. radseitig als Radnabenmotor oder als Felgenmotor ausgeführt sein. Jede Transporteinheit umfasst ein eigenes auf Basis von Sensordaten geregeltes Antriebssystem mit einer Steuereinheit, das sowohl den Antrieb der Transporteinheiten selbst als auch die Lenkung der Transporteinheiten übernehmen kann. An der Transporteinheit, bspw. am Handgriff bzw. den Handgriffen oder an einer Verbindung des Handgriffs oder der Handgriffe mit der Transporteinheit, sind Sensoren angeordnet, über die die von der Bedienperson über den Handgriff auf die Transporteinheit ausgeübten Kräfte direkt oder indirekt erfasst werden können. Auf Basis dieser Kräfte steuert die Steuereinheit dann den Antrieb, um die von der Bedienperson beabsichtigte Fortbewegung der Transporteinheit zu unterstützen. Die Transporteinheit folgt dabei den Führungsgesten der Bedienperson. Die Bedienperson muss zur Führung lediglich geringe Kräfte in den Handgriff bzw. die Handgriffe einleiten. Der zum Folgen der Bedienperson erforderliche Vortrieb erfolgt durch das Antriebssystem der Transporteinheit.

Vorzugsweise wird bei einer indirekten Erfassung der von der Bedienperson eingebrachten Kräfte zusätzlich auch eine Messeinrichtung zur Erfassung von Ladungsänderungen eingesetzt, um die durch den Bediener eingebrachten Kräfte von den durch eine Ladungsänderung wirkenden Kräften unterscheiden zu können.

Die Steuereinheit umfasst vorzugsweise auch Sensoren in Verbindung mit einer Balance-Regelung. Die Antriebsräder werden dabei bei manueller Führung der Transporteinheit so gesteuert, dass die Transporteinheit ohne Einwirkung der Bedienperson selbständig in einer ausbalancierten Stellung verbleibt, also nicht unkontrolliert umkippen kann. Eine derartige geregelte Überwachung der Neigung der Transporteinheit ist dem Fachmann bspw. von einem einachsigen Fahrzeug zur Personenbeförderung bekannt. Dieses Fahrzeug ist jedoch für den Gütertransport nicht geeignet, da hier die Fahrbefehle aus der Verlagerung des Körperschwerpunktes der auf dem Fahrzeug befindlichen Person abgeleitet werden - eine Be- oder entladung mithin als Fahrbefehl interpretiert und das Fahrzeug hierdurch selbsttätig in Fahrt geraten würde.

In einer vorteilhaften Weiterbildung für den Gütertransport reagiert die in der Steuereinheit vorgesehene Regelung adaptiv auf Änderungen der Beladung (Masse und Position) sowie des Untergrundes (Unebenheiten, Glätte), und leitet aus diesen Änderungen keinen Fahrbefehl ab, sondern hält die Transporteinheit auch bei Änderung dieser Umgebungsvariablen in ihrer stabilen aufrechten Orientierung, bei möglichst geringer Änderung der Stand-Position. Der Fahrbefehl zur Änderung der Position wird in diesem Falle durch den führenden, nicht auf dem Transportfahrzeug befindlichen Bediener übermittelt. Hierzu müssen selbstverständlich wiederum entsprechende Sensoren in der Transporteinheit, vorteilhafterweise in dem Handgriff oder den Handgriffen vorgesehen sein.

Vorzugsweise wird die Lenkung der Transporteinheit über die Steuereinheit durch eine Drehmomentsteuerung der Einzelräder, auch bekannt als Panzersteuerung, erreicht. Die Einzelräder werden dabei getrennt voneinander angesteuert, wobei die Lenkung durch verschiedene Rotationsgeschwindigkeiten der Räder erzielt wird. Im eingekoppelten Zustand können mit einer derartigen Lenkung die Transporteinheiten innerhalb des Fahrzeugverbundes dem Führungsfahrzeug bei geeigneter Steuerung durch die Steuereinheit spurtreu folgen. Hierzu werden Sensordaten der entsprechenden Transporteinheit und/oder einer oder mehrerer der vorausfahrenden Transporteinheiten genutzt, aus denen die einzuhaltende Spur berechnet und die dafür erforderliche Ansteuerung der Einzelräder bestimmt werden kann. Vorteilhafterweise ist die Kupplungsvorrichtung hierbei als Deichsel mit mehreren in der Horizontalen drehbaren Gelenken ausgebildet (mehrgliedrige Deichsel). Die Steuerung zur Einhaltung der Spurtreue erfolgt dabei bspw. auf Grundlage einer Bahnberechnung für die jeweils vorausfahrende Transporteinheit mittels der gemessenen Deichselwinkel zur vorausfahrenden Transporteinheit und der Fahrgeschwindigkeiten und durch Einhaltung dieser Bahn über die Steuerung der eigenen Antriebe. Bei einer derartigen vorteilhaften Ausgestaltung erfolgt die Fahrzeuglenkung also nicht durch ein zentrales Lenksystem (Lenkrad, Handhebel etc.), sondern durch Bahnführung auf der Grundlage der berechneten Trajektorien der vorausfahrenden Transporteinheit(en). Dadurch kann die Reihenfolge der einzelnen Transporteinheiten im Fahrzeugverbund beliebig gewählt werden.

Die einzelnen Transporteinheiten können auch so ausgebildet sein, dass sie autonom fahren können. Hierzu muss die bereits angeführte Steuereinheit so ausgebildet sein, dass sie das Fahrzeug anhand der Sensordaten und zusätzlicher Daten zur Ermittlung der eigenen Position sowie der Zielposition zur Erreichung der Zielposition eigenständig steuert.

In einer weiteren vorteilhaften Ausgestaltung sind die Transporteinheiten mit einer aktiven Aus- und Einkoppelhilfe versehen, die die Bedienperson beim Auskoppeln und Einkoppeln unterstützt. Dies kann bspw. in Form einer geeigneten Abstützhilfe an den Transporteinheiten, insbesondere eines aufklapp- oder ausfahrbaren Stützelements, zum Unterstützen der Neigungsänderung beim Übergang vom eingekoppelten in den ausgekoppelten Zustand und umgekehrt erfolgen. Mit einer derartigen Aus- und Einkoppelhilfe können die Transporteinheiten bzw. Anhänger in einer vorgegebenen geneigten Position gehalten werden. Ein Beispiel hierfür ist die Anordnung eines ausfahrbaren Stempels oder eines mit einem Rad versehenen Stempels unter den einzelnen Transporteinheiten.

Die einzelnen Transporteinheiten sind so ausgestaltet, dass sie mit Transportbehältnissen bestückt werden können, die fest montiert oder austauschbar sind. Bei diesen Transportbehältnissen kann es sich bspw. um Container oder Gitterboxen handeln, wie sie im Warenumschlag in Depots Verwendung finden. Damit wird der Aufwand beim kostenintensiven Umschlag der einzelnen Sendungen minimiert.

Mit dem vorgeschlagenen Transportsystem wird die Effizienz des Zustellvorganges von Paketsendungen gerade im innerstädtischen Bereich erhöht, da insbesondere bei hoher Zustelldichte, wie z.B. in einem Einkaufszentrum, der manuelle Umschlag von einem großvolumigen Zustellfahrzeug auf ein handgeführtes Transportmittel entfallen kann. Damit kann auch eine Aufhebung der Gewichtsbeschränkung von Einzelsendungen über die derzeitig gültige Zumutbarkeitsgrenze in Erwägung gezogen werden, da alle Sendungen vom Depot bis zur Übergabe in einem Transportgefäß (Gitterbox) verbleiben können, also nicht händisch umgeschlagen oder fußläufig transportiert werden müssen. Durch bedarfsgerechte Anpassung der Konfiguration der Transporteinheiten hinsichtlich Länge/Transportkapazität des Fahrzeugverbundes und der Einzelfahrzeuge inkl. Führungsfahrzeug lässt sich eine höhere Kosteneffizienz der besonders kostenintensiven sogenannten "letzten Meile" erreichen.

In der bevorzugten Ausgestaltung mit einzelnen, sensorgesteuerten Antriebssystemen für jede Transporteinheit mit jeweiliger Lenk- und Antriebsregelung wird eine vollständige Autarkie der einzelnen Transporteinheiten im Zugverbund oder im Solobetrieb erreicht, wodurch eine sehr flexible Modularität gegeben ist. Das Transportsystem ermöglicht eine schmale, raumsparende Spurweite, die an den Erfordernissen des Transports von Gitterboxen orientiert ist. In der besonders vorteilhaften Ausgestaltung mit der spurtreuen gesteuerten Lenkung der einzelnen Transporteinheiten kann eine Navigierbarkeit auf engem Raum mit einem Wendekreis von unter drei Metern im Zugverbund erzielt werden. Damit ist eine Befahrbarkeit von Passagen und Fußgängerzonen sowie der Indoorbetrieb in Einkaufszentren möglich. Das spurtreue Fahren im Zugverbund erfolgt dabei ohne Versatz der Folgefahrzeuge. Durch Auskoppeln und manuelle Führung der Einzelfahrzeuge lassen sich dann zusätzlich Hindernisse, wie Absätze oder Stufen ohne weiteres überwinden, um spezielle Anlieferungen z.B. in Gewerbehöfen oder kommerziell genutzten mehrgeschossigen Gebäuden zu ermöglichen.

### Kurze Beschreibung der Zeichnungen

Das vorgeschlagene Transportsystem wird nachfolgend anhand eines Ausführungsbeispiels nochmals kurz erläutert. Hierbei zeigen:
- Fig. 1: ein Beispiel für das Transportsystem, hier bestehend aus zwei Transporteinheiten und einem Führungsfahrzeug, in gekoppeltem Zustand;
- Fig. 2: das Transportsystem der Figur 1, bei dem eine Transporteinheit ausgekoppelt wird;
- Fig. 3: einen Ablaufplan der indirekten Erfassung von zum Manövrieren eingebrachten Bedienerkräften;
- Fig. 4: schematisch Parameter für eine rotatorische Regulierung des Schwerpunktwinkels θ_{sF}; und
- Fig. 5: schematisch Parameter für eine translatorische Regulierung des Schwerpunktwinkels θ_{sF}.

### Wege zur Ausführung der Erfindung

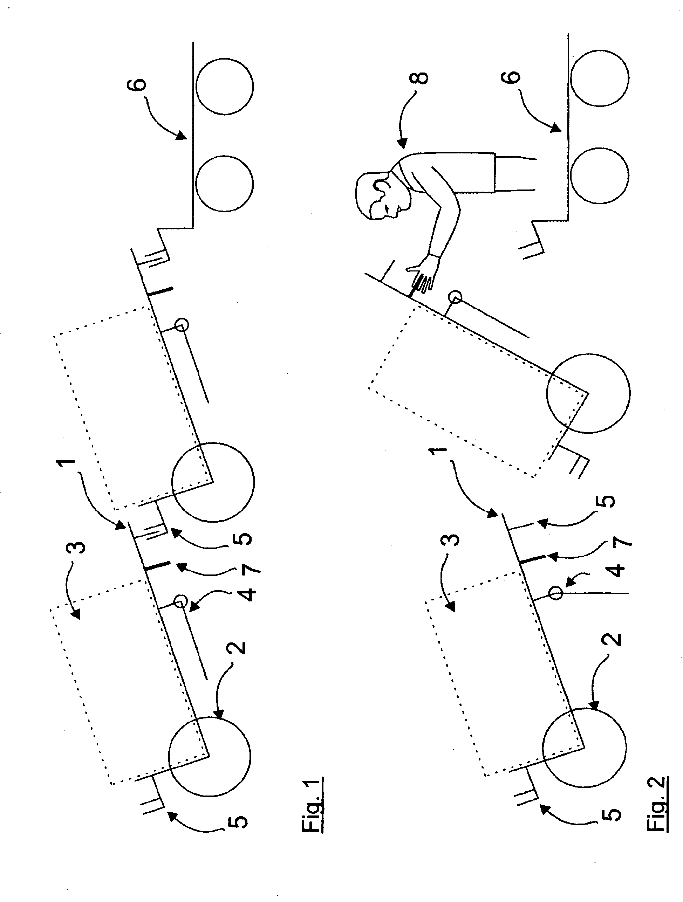

Figur 1 zeigt ein Beispiel für eine Ausgestaltung des vorgeschlagenen Transportsystems in schematischer Darstellung. In diesem Beispiel sind lediglich zwei Transporteinheiten 1 und ein Führungsfahrzeug 6 dargestellt. Die Transporteinheiten 1 sind über ihre Kupplungsvorrichtungen 5 miteinander und mit dem Führungsfahrzeug 6 verkoppelt. Jede der Transporteinheiten 1 hat eine Ladefläche, auf der die Ladung 3, bspw. ein Container oder eine Gitterbox, aufgebracht ist. Die Transporteinheiten 1 sind in diesem Beispiel einachsig ausgeführt, wobei die Räder 2 über nicht dargestellte Antriebssysteme gesteuert werden können.

Jede Transporteinheit 1 verfügt ferner über eine Ein-/Auskoppelhilfe, im vorliegenden Beispiel eine ausklappbare Stütze 4, durch die die Bedienperson 8 bei der Auskopplung einer Transporteinheit 1 unterstützt wird. Dies ist in Figur 2 schematisch angedeutet, bei der die Bedienperson 8 eine der Transporteinheiten 1 aus dem Fahrzeugverbund auskoppelt. Hierzu wird die Stütze 4 der Transporteinheit ausgefahren, die sich unmittelbar hinter der auszukoppelnden Transporteinheit befindet, wodurch die auszukoppelnde Transporteinheit durch die Bedienperson 8 leichter ausgekoppelt werden kann, wie aus Figur 2 ersichtlich ist. Die Transporteinheit 1 wird dabei durch die Bedienperson 8 an den beiden Handgriffen 7 manuell geführt, wie dies von den bisher eingesetzten Sackkarren bekannt ist, hier jedoch in einer vorteilhaften Ausführung nahezu kräftefrei durch das beschriebene aktive Antriebssystem.

Selbstverständlich ist das vorgeschlagene Transportsystem jedoch nicht auf eine derartige Ausgestaltung der Transporteinheiten beschränkt.

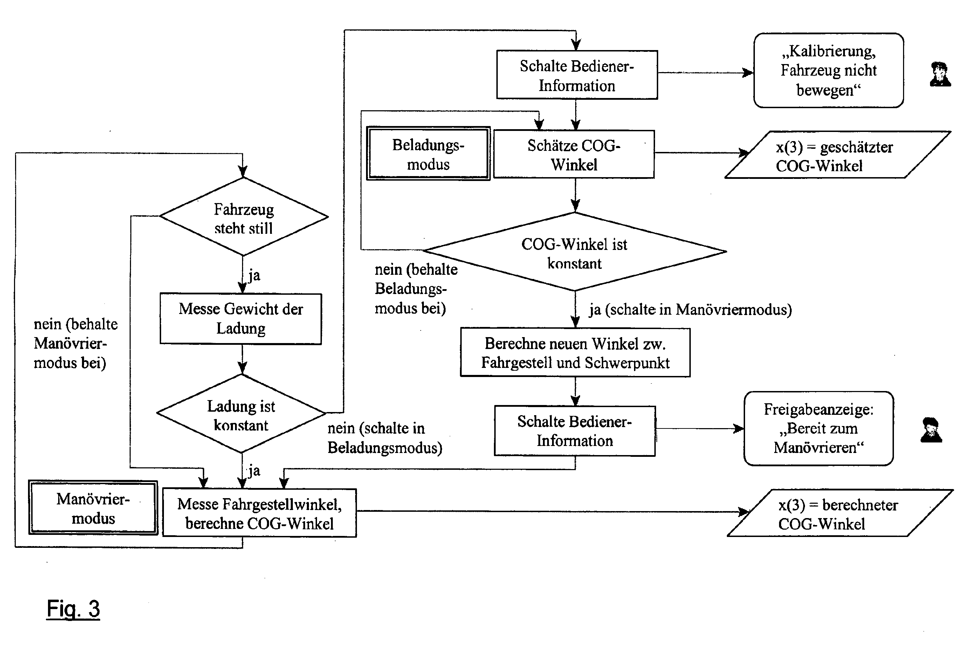

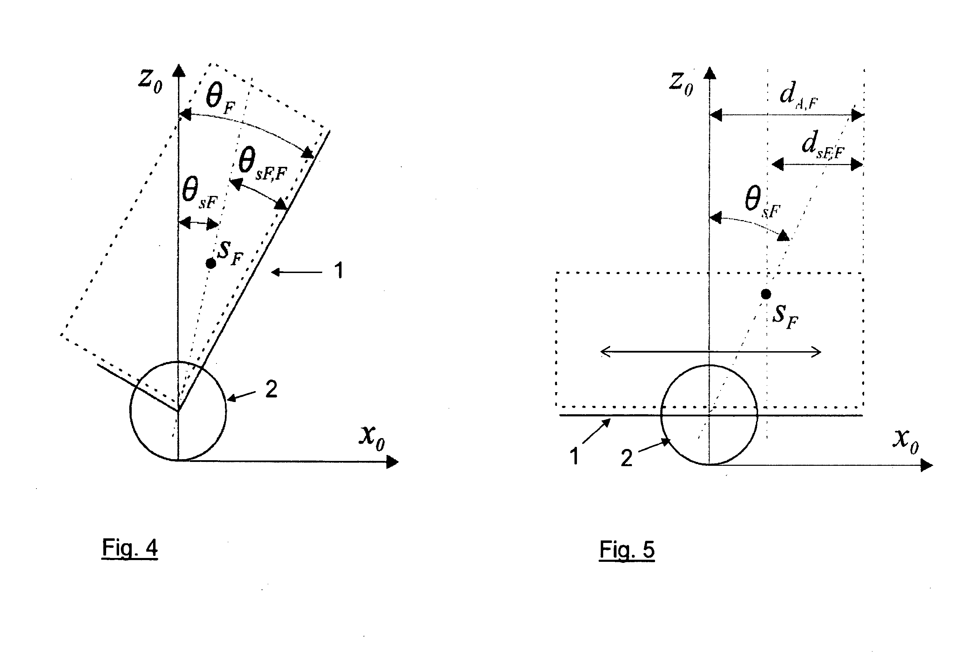

Die indirekte Erfassung der vom Bediener zum Manövrieren eingebrachten Kräfte erfolgt beispielsweise durch einen geeigneten Störgrößenschätzer bzw. - beobachter in Verbindung mit einer Messeinrichtung zur Erfassung von Ladungsänderungen. Ein beispielhafter Ablaufplan ist in Figur 3 dargestellt. Diese Messeinrichtung zur Erfassung von Ladungsänderungen dient zur Differenzierung zwischen den vom Bediener zum Manövrieren eingebrachten Kräften und der auf das Gleichgewicht des Fahrzeugs ebenfalls einwirkenden, durch wechselnde Beladung sich sprunghaft ändernden Gewichtskräften der Beladung. Wird eine Beladungsänderung detektiert, so schätzt der Algorithmus der Steuereinheit zunächst die neue Schwerpunktslage des beladenen Fahrzeugs, im Ablaufplan als COG-Winkel bezeichnet (COG: centre of gravity). Diese ist die Grundlage für die Berechnung des neuen quasistabilen Fahrgestellwinkels im Falle einer rotatorischen Regulierung (vgl. Fig. 4) bzw. der neuen quasistabilen Achsposition bei translatorischer Regulierung (vgl. Fig. 5). Die nach Abschluss dieser Schätzung / Kalibration detektierten auf das Fahrzeug einwirkenden Störkräfte können damit eindeutig als vom Bediener zum Manövrieren eingebrachte Störkräfte erkannt werden. Während des Kalibriervorgangs nach detektierter Beladungsänderung kann dem Bediener durch eine geeignete Anzeige signalisiert werden, dass sich die Fahrzeugantriebsregelung im Zustand der Neukalibrierung befindet. Hiermit kann der Bediener aufgefordert werden, Manövrierkräfte erst nach Abschluss der Kalibration einzubringen. Der Kalibriervorgang wird erneut gestartet, sobald von der Messeinrichtung eine Ladungsänderung erkannt wird.

Zusätzlich ist der Algorithmus der Steuereinheit vorzugsweise so ausgelegt, dass die Neukalibration nach Ladungsänderung nur im Stillstand stattfindet. Dies ist sinnvoll, da während des Fahrens aufgrund von Bodenunebenheiten vertikale Beschleunigungen der Beladung und damit von der Beladung ausgehende vertikale Inertialkräfte resultieren können, welche den Kalibriervorgang stören können, und ebenfalls fälschlich als Beladungsänderung interpretiert werden könnten. Dementsprechend darf die Beladungsänderung ebenfalls nur im Stillstand erfolgen. Dieses stellt aber im Alltagsbetrieb keine Einschränkung dar.

Fig. 4 zeigt Parameter für eine rotatorische Regulierung des Schwerpunktwinkels θ_{sF} im Falle einer Ausgestaltung, bei der die Achse im hinteren Bereich der Transporteinheit gelagert ist. Der Winkel θ_{F} bezeichnet dabei den Neigungswinkel des Fahrgestells bezüglich der Senkrechten z₀, θ_{sF} (COG-Winkel) den Schwerpunktwinkel und θ_{sF,F} den Differenzwinkel zwischen Fahrgestellwinkel θ_{F} und Schwerpunktwinkel 0_{sF}. Zur Regulierung des Schwerpunktwinkels für eine Ausbalancierung der Transporteinheit wird der Neigungswinkel des Fahrgestells durch geeignete Steuerung der Rotation der Antriebsräder verändert.

Eine weitere mechanische Methode zum Balancieren des Fahrzeugs wird in Verbindung mit Fig. 5 erläutert. Diese Figur zeigt Parameter für eine translatorische Regulierung des Schwerpunktwinkels θ_{sF} im Falle einer Ausgestaltung, bei der die Achse der Transporteinheit in und gegen die Fahrtrichtung translatorisch unter dem Fahrgestell verschoben werden kann. Der Abstand d_{A,F} bezeichnet den Abstand zwischen der Achse und dem hinteren Ende des Fahrgestells, θ_{sF} (COG-Winkel) den Schwerpunktwinkel und d_{sF,F} den Abstand zwischen dem hinteren Ende des Fahrgestells und dem Schwerpunkt S_{F}. Hierbei wird zur Regulierung der Schwerpunktposition in Relation zur Achsposition (bzw. zur Regulierung des Schwerpunktwinkels θ_{sF}) nicht der Neigungswinkel des gesamten Fahrgestells verändert, sondern die Achse wird translatorisch unter dem Fahrgestell verschoben.

Die vorliegende Erfindung betrifft somit ein multifunktionales Transportsystem mit mehreren fahrbaren Transporteinheiten, die jeweils in einem vorderen und einem hinteren Bereich eine Kupplungsvorrichtung aufweisen, über die die Transporteinheiten aneinander und/oder an ein Führungsfahrzeug gekoppelt werden können. In einer vorzugsweisen Ausgestaltung folgen die einzelnen mit Antrieben ausgestatteten Transporteinheiten durch eine jeweils autarke Bahnsteuerung dem die Bahn vorgebenden Führungsfahrzeug spurtreu, wodurch das Navigieren auch in beengten innerstädtischen Bereichen ermöglicht wird. Die Transporteinheiten selbst können zudem als autarke Einheiten aus dem Transportsystem entnommen bzw. ausgekoppelt werden, sie weisen hierfür zusätzlich zu den Kupplungen mindestens einen Handgriff auf, über den sie in ausgekoppeltem Zustand manuell durch eine Bedienperson geführt werden können, so dass die zu transportierenden Sendungen ohne händisches Umladen bzw. Transportieren bis zur Zustellung auf der Transporteinheit verbleiben können, wobei auch Bordsteine und andere Hindernisse überwunden werden können. Dieses manuelle Führen der einzelnen Transporteinheit erfolgt aufgrund des auf Basis von Sensordaten geregelten Antriebssystems nahezu kräftefrei. Mit dem vorgeschlagenen Transportsystem wird insbesondere die Zustellung von Paketsendungen im innerstädtischen Bereich effizienter und somit kostengünstiger und umweltfreundlicher realisiert.

### Bezugszeichenliste

- 1: fahrbare Transporteinheit
- 2: Rad
- 3: Ladung
- 4: Stütze
- 5: Kupplungsvorrichtung
- 6: Führungsfahrzeug
- 7: Handgriff
- 8: Bedienperson

## Patentansprüche

1. Transportsystem mit mehreren fahrbaren Transporteinheiten (1), die jeweils in einem vorderen und einem hinteren Bereich eine Kupplungsvorrichtung (5) aufweisen, über die sie aneinander und/oder an ein Führungsfahrzeug (6) koppelbar sind, wobei
- die Transporteinheiten (1) einachsige Fahrzeuge sind, deren Achse mit jeweils einem Rad pro Seite, mit mehreren Rädern pro Seite oder mit umlaufenden Riemen bzw. Ketten bestückt ist,
- jede Transporteinheit (1) wenigstens einen Handgriff (8) aufweist, über den die Transporteinheit (1) von einer Bedienperson (7) manuell geführt werden kann,
- jede Transporteinheit (1) über ein auf Basis von Sensordaten geregeltes Antriebssystem mit einer Steuereinheit verfügt, über die der Antrieb und somit die Lenkung der Transporteinheit (1) steuerbar sind,
- an der Transporteinheit (1), insbesondere am Handgriff (8), Sensoren angeordnet sind, über die von der Bedienperson (7) auf die Transporteinheit (1) ausgeübte Kräfte direkt oder indirekt erfasst werden können, und
- die Steuereinheit so ausgebildet ist, dass sie den Antrieb bei manueller Führung der Transporteinheit (1) auf Basis der erfassten Kräfte zur Unterstützung der von der Bedienperson (7) beabsichtigten Fortbewegung der Transporteinheit (1) ansteuert.

2. Transportsystem nach Anspruch 1,
**dadurch gekennzeichnet,**
**dass** die Achse der Transporteinheiten (1) im hinteren Bereich der jeweiligen Transporteinheit (1) gelagert ist.

3. Transportsystem nach Anspruch 1 oder 2,
**dadurch gekennzeichnet,**
**dass** die jeweilige Transporteinheit (1) geeignete Sensoren aufweist und die Steuereinheit so ausgebildet ist, dass sie den Antrieb bei manueller Führung der Transporteinheit (1) auf Basis der von den Sensoren erhaltenen Sensordaten so ansteuert, dass die Transporteinheit (1) selbständig in einer ausbalancierten Orientierung verbleibt.

4. Transportsystem nach Anspruch 3,
**dadurch gekennzeichnet,**
**dass** die Achse der Transporteinheiten (1) in Fahrtrichtung verschiebbar an einem Fahrgestell gelagert ist und dass die Steuereinheit so ausgebildet ist, dass sie die Position der Achse relativ zum Fahrgestell während der manuellen Führung der Transporteinheit (1) so reguliert, dass die Transporteinheit (1) selbständig in der ausbalancierten Orientierung verbleibt.

5. Transportsystem nach einem der Ansprüche 1 bis 4, **dadurch gekennzeichnet,**
**dass** die Transporteinheiten (1) eine Messeinrichtung zur Erfassung von Ladungsänderungen aufweisen.

6. Transportsystem nach Anspruch 5,
**dadurch gekennzeichnet,**
**dass** die Steuereinheit die Messeinrichtung zur Erfassung von Ladungsänderungen nutzt, um aufgrund einer Ladungsänderung auf die Transporteinheit (1) einwirkende Kräfte von Kräften zu unterscheiden, die durch die Bedienperson (7) auf die Transporteinheit (1) ausgeübt werden.

7. Transportsystem nach einem der Ansprüche 1 bis 6,
**dadurch gekennzeichnet,**
**dass** die Steuereinheit so ausgebildet ist, dass sie die Lenkung der Transporteinheit (1) über eine getrennte Steuerung einer Rotation von Einzelrädern (2) der Transporteinheit (1) bewirkt.

8. Transportsystem nach Anspruch 7,
**dadurch gekennzeichnet,**
**dass** die Steuereinheit einer Transporteinheit so ausgebildet ist, dass sie im eingekoppelten Zustand der Transporteinheiten (1) Sensordaten der jeweiligen Transporteinheit (1) und/oder einer oder mehrerer vorausfahrender Transporteinheiten (1) und/oder des vorausfahrenden Führungsfahrzeugs auswertet, eine für eine spurtreue Fortbewegung einzuhaltende Bahn berechnet, die dafür erforderliche Steuerung der Einzelräder (2) bestimmt und die Einzelräder (2) entsprechend ansteuert.

9. Transportsystem nach einem der Ansprüche 1 bis 8,
**dadurch gekennzeichnet,**
**dass** die Steuereinheit der einzelnen Transporteinheiten (1) so ausgebildet ist, dass die Transporteinheiten (1) autonom fahren können.

10. Transportsystem nach einem der Ansprüche 1 bis 9,
**dadurch gekennzeichnet,**
**dass** die Kupplungsvorrichtung (5) als Deichsel mit mehreren in der Horizontalen drehbaren Gelenken ausgebildet ist.

11. Transportsystem nach einem der Ansprüche 1 bis 10,
**dadurch gekennzeichnet,**
**dass** die Transporteinheiten (1) mit einer aktiven Aus- und Einkoppelhilfe, insbesondere einem ausklapp- oder ausfahrbaren Stützelement (4), versehen sind.

12. Transportsystem nach einem der Ansprüche 1 bis 11,
**dadurch gekennzeichnet,**
**dass** die Transporteinheiten (1) fest montierte Transportbehältnisse, insbesondere Gitterboxen, oder Einrichtungen zur Befestigung auswechselbarer Transportbehältnisse, insbesondere Gitterboxen, aufweisen.

13. Fahrbare Transporteinheit, die für den Einsatz in dem Transportsystem nach einem der Ansprüche 1 bis 12 ausgebildet ist.

## Claims

1. Transport system having a plurality of mobile transport units (1), which each have a coupling device (5) in a front and a rear region, by means of which they can be coupled to each other and/or to a lead vehicle (6), wherein
- the transport units (1) are single-axle vehicles, the axle of which is equipped with one wheel per side, with a plurality of wheels per side or with circulating belts or chains,
- each transport unit (1) has at least one handle (8), which allows the transport unit (1) to be manually guided by an operator (7),
- each transport unit (1) has a drive system regulated on the basis of sensor data, with a control unit, by means of which the drive and thus the steering of the transport unit (1) is controllable,
- sensors are arranged on the transport unit (1), in particular on the handle (8), by means of which sensors forces exerted on the transport unit (1) by the operator (7) are directly or indirectly detected, and
- the control unit is configured in such a manner that it actuates the drive during manual guiding of the transport unit (1) on the basis of the forces detected in order to support the movement of the transport unit (1) intended by the operator (7).

2. Transport system according to Claim 1,
**characterised in that**
the axle of the transport units (1) is mounted in the rear region of the respective transport unit (1).

3. Transport system according to Claim 1 or 2,
**characterised in that**
the respective transport unit (1) comprises appropriate sensors and the control unit is configured in such a manner that it actuates the drive during manual guiding of the transport unit (1) on the basis of the sensor data obtained by the sensors in such a manner that the transport unit (1) remains independently in a balanced orientation.

4. Transport system according to Claim 3,
**characterised in that**
the axle of the transport units (1) is mounted on a chassis to be movable relative to the chassis in a driving direction and that the control unit is configured in such a manner that it controls the position of the axle relative to the chassis during manual guiding of the transport unit (1) in such a manner that the transport unit (1) remains independently in the balanced orientation.

5. Transport system according to one of Claims 1 to 4,
**characterised in that**
the transport units (1) comprise a measuring unit for detecting cargo changes.

6. Transport system according to Claim 5,
**characterised in that**
the control unit makes use of the measuring unit for detecting cargo changes in order to differentiate between forces exerted on the transport unit (1) by cargo changes and the forces exerted on the transport unit (1) by the operator (7).

7. Transport system according to one of Claims 1 to 6,
**characterised in that**
the control unit is configured in such a manner that it effects the steering of the transport unit (1) by means of a separate control of a rotation of individual wheels (2) of the transport unit (1).

8. Transport system according to Claim 7,
**characterised in that**
the control unit of the transport units is configured in such a manner that, when the transport units (1) are coupled, it evaluates sensor data of the respective transport unit (1) and/or of one or a plurality of preceding transport units (1) and/or of the preceding lead vehicle, calculates a path to be maintained for directionally stable movement, defines the control of the individual wheels (2) necessary therefore and controls the individual wheels (2) correspondingly.

9. Transport system according to one of Claims 1 to 8,
**characterised in that**
the control unit of the individual transport units (1) is configured in such a manner that the transport units (1) can move autonomously.

10. Transport system according to one of Claims 1 to 9,
**characterised in that**
the coupling device (5) is configured as a drawbar having a plurality of articulations which can be horizontally rotated.

11. Transport system according to one of Claims 1 to 10,
**characterised in that**
the transport units (1) are provided with an active coupling and decoupling aid, in particular a foldable or extendible support element (4).

12. Transport system according to one of Claims 1 to 11,
**characterised in that**
the transport units (1) have permanently mounted transport containers, in particular wire mesh crates, or means for fastening replaceable transport containers, in particular wire mesh crates.

13. Mobile transport unit, which is configured for use in the transport system according to one of Claims 1 to 12.

## Revendications

1. Système de transport avec plusieurs unités de transport (1) mobiles qui comportent respectivement dans une zone avant et arrière un dispositif d'accouplement (5) au moyen duquel elles peuvent être accouplées les unes aux autres et/ou à un véhicule de guidage (6), pour lequel
- les unités de transport (1) sont des véhicules à un essieu dont l'essieu est équipé respectivement d'une roue par côté, de plusieurs roues par côté ou de courroies ou chaînes rotatives,
- chaque unité de transport (1) comporte au moins une poignée (8) au moyen duquel l'unité de transport (1) peut être manuellement guidée par un opérateur (7),
- chaque unité de transport (1) dispose d'un système d'entraînement réglé sur la base de données de capteur avec une unité de commande au moyen de laquelle l'entraînement et de ce fait l'orientation de l'unité de transport (1) peuvent être pilotés,
- des capteurs sont disposés sur l'unité de transport (1), en particulier sur la poignée (8) au moyen desquels on peut saisir directement ou indirectement des forces exercées par l'opérateur (7) sur l'unité de transport (1), et
- l'unité de commande est constituée de telle sorte qu'elle pilote l'entraînement au guidage manuel de l'unité de transport (1) sur la base des forces saisies pour assister le déplacement de l'unité de transport (1) envisagé par l'opérateur (7).

2. Système de transport selon la revendication 1,
**caractérisé en**
**ce que** l'essieu des unités de transport (1) est logé dans la zone arrière de l'unité de transport (1) respective.

3. Système de transport selon la revendication 1 ou 2,
**caractérisé en**
**ce que** l'unité de transport (1) respective comporte des capteurs appropriés et l'unité de commande est constituée de telle sorte qu'elle pilote l'entraînement au guidage manuel de l'unité de transport (1) sur la base des données de capteur obtenues par les capteurs de sorte que l'unité de transport (1) reste autonome dans une orientation équilibrée.

4. Système de transport selon la revendication 3,
**caractérisé en ce que** l'essieu des unités de transport (1) est logé sur un châssis mobile dans le sens de la marche et **en ce que** l'unité de commande est constituée de telle sorte qu'elle règle la position de l'essieu par rapport au châssis pendant le guidage manuel de l'unité de transport (1) de sorte que l'unité de transport (1) reste autonome dans l'orientation équilibrée.

5. Système de transport selon une quelconque des revendications 1 à 4,
**caractérisé en ce que** les unités de transport (1) comportent un dispositif de mesure pour saisir les variations de chargement.

6. Système de transport selon la revendication 5,
**caractérisé en**
**ce que** l'unité de commande utilise le dispositif de mesure pour saisir les variations de chargement pour différencier sur la base d'une variation de chargement sur l'unité de transport (1) les forces agissantes des forces qui sont exercées par l'opérateur (7) sur l'unité de transport (1).

7. Système de transport selon une quelconque des revendications 1 à 6,
**caractérisé en**
**ce que** l'unité de commande est constituée de telle sorte qu'elle effectue l'orientation de l'unité de transport (1) par un pilotage séparé d'une rotation des roues individuelles (2) de l'unité de transport (1).

8. Système de transport selon la revendication 7,
**caractérisé en**
**ce que** l'unité de commande d'une unité de transport est constituée de telle sorte qu'elle évalue, à l'état accouplé des unités de transport (1), les données de capteur de l'unité de transport (1) respective et/ou d'une ou plusieurs unités de transport (1) passant devant et/ou du véhicule de guidage passant devant, calcule une trajectoire à respecter pour un déplacement fidèle au tracé, détermine le pilotage nécessaire à cet effet des roues individuelles (2) et pilote en conséquence les roues individuelles (2).

9. Système de transport selon une quelconque des revendications 1 à 8,
**caractérisé en**
**ce que** l'unité de commande des unités de transport (1) individuelles est constituée de telle sorte que les unités de transport (1) peuvent se déplacer de façon autonome.

10. Système de transport selon une quelconque des revendications 1 à 9,
**caractérisé en**
**ce que** le dispositif d'accouplement (5) est constitué en tant que timon avec plusieurs articulations pouvant pivoter dans le plan horizontal.

11. Système de transport selon une quelconque des revendications 1 à 10,
**caractérisé en**
**ce que** les unités de transport (1) sont munies d'une assistance d'accouplement et de désaccouplement active, en particulier d'un élément d'appui dépliable ou télescopique (4).

12. Système de transport selon une quelconque des revendications 1 à 11,
**caractérisé en**
**ce que** les unités de transport (1) comportent des conteneurs de transport, en particulier des caisse à claire-voie, ou des dispositifs pour fixer des conteneurs de transport échangeables, en particulier des caisses à claire-voie.

13. Unité de transport mobile qui est constituée pour l'utilisation dans un système de transport selon une quelconque des revendications 1 à 12.
